# EUROPEAN PATENT SPECIFICATION

(11) **EP 4 500 106 B1**
(45) Date of publication and mention of the grant of the patent: **23.09.2026**
(21) Application number: 22724516.4
(22) Date of filing: 31.03.2022
(51) Int. Cl.: G01B 11/24

(54) **DEVICE AND METHOD FOR GENERATING A THREE-DIMENSIONAL TOPOGRAPHICAL SURFACE OF A SAMPLE**
VORRICHTUNG UND VERFAHREN ZUR ERZEUGUNG EINER DREIDIMENSIONALEN TOPOGRAPHISCHEN OBERFLÄCHE EINER PROBE
DISPOSITIF ET MÉTHODE DE GÉNÉRATION DE SURFACE TOPOGRAPHIQUE TRIDIMENSIONNELLE D'UN ÉCHANTILLON

(43) Date of publication of application: 05.02.2025
(73) Proprietor: Hewlett-Packard Development Company L.P., Spring, TX 77389 (US)
(72) Inventor: THOMAS III, Fred Charles, Fort Collins, Colorado 80528 (US); ST. JOHN, Joshua Alan, San Diego, California 92127 (US); GARCIA-REYERO VINAS, Santiago, San Diego, California 92127 (US); COLUMBUS, Owen P., Spring, Texas 77389 (US); DAMIR, Christian M., Fort Collins, Colorado 80528 (US)
(74) Representative: Hoffmann Eitle
(86) International application number: PCT/US2022/022838
(87) International publication number: WO 2023/191791

(56) References cited:
- US-A1- 2003 030 636
- US-A1- 2004 233 421
- US-A1- 2014 372 075
- US-A1- 2014 376 003

## Description

### BACKGROUND

Physically based rendering (PBR) is an approach to synthesize three-dimensional (3D) topographical surface images of samples. PBR can employ photometric stereo imaging techniques, for instance. In photometric stereo imaging, two-dimensional (2D) images of a sample are captured under different lighting conditions. From these multiple 2D images, a 3D topographical surface image of the sample can be synthesized. In addition, surface reflective meta data may be synthesized for image rendering of surface reflections in which the orientation and color of a changing illuminating light source is correctly accounted.

US 2004/0233421 A1 discloses a portable 3D topographical surface capture device.

### BRIEF DESCRIPTON OF THE DRAWINGS

FIGs. 1A and 1B are diagrams depicting two different example modes of operation of a three-dimensional (3D) topographical surface capture device.
FIGs. 2A, 2B, and 2C are perspective, exploded perspective, and cross-sectional diagrams, respectively, of an example 3D topographical surface capture device operable in the two different modes of FIGs. 1A and 1B.
FIG. 3 is a block diagram of example circuitry that can be employed in the 3D topographical surface capture device of FIGs. 2A, 2B, and 2C.
FIG. 4 is a flowchart of an example method of use of the 3D topographical surface capture device of FIGs. 2A, 2B, and 2C in the two different modes of FIGs. 1A and 1B.
FIG. 5 is a block diagram of an example 3D topographical surface capture device.

### DETAILED DESCRIPTION

As noted in the background, physically based rendering (PBR) provides for the synthesis of three dimensional (3D) topographical surface images of samples, and be realized via photometric stereo imaging techniques. Existing 3D topographical surface capture devices that employ photometric stereo imaging techniques include a chamber in which a sample is placed. Lighting conditions to which the sample is subjected can therefore be tightly controlled and multiple two-dimensional (2D) images captured under different lighting conditions from which a 3D topographical surface image of the sample can be synthesized. The devices are generally under the control of a host computing device.

While such 3D topographical surface capture devices work well enough for samples that are sufficiently small and portable to be placed in the chambers, they are as a general rule unusable for large and/or immovable samples. Samples may be so large, for instance, that they cannot be placed in the chambers of even the largest 3D topographical surface capture devices. Furthermore, even small samples that can fit in the chambers may not be able to be moved for placement within the chambers. A priceless artifact in a museum, for example, may not be permitted to be physically handled for placement within the chamber of an existing 3D topographical surface capture device.

Techniques described herein pertain to a 3D topographical surface capture device that alleviates these and other shortcomings of existing such capture devices. The described capture device is portable and can be independently operated in two modes without requiring communicative or conductive connection with any other device. In a first mode, a sample is placed in a tray that is then attached to the bottom of the device. Light sources and an imaging subassembly internal to the device are then controlled to generate a 3D topographical surface image of the sample using photometric stereo imaging techniques.

In a second mode, the tray is removed from the bottom of the 3D topographical surface capture device. The capture device may be attached to a mount so that the bottom of the device can be placed in such a way to abut a sample. The light sources and the imaging subassembly are then controlled as before to generate a 3D topographical surface image of the sample using photometric stereo imaging techniques. In this second mode, then, the sample does not have to be moved inside or to the capture device, and thus can be large and/or immovable. Instead, the capture device is moved to the location of the sample.

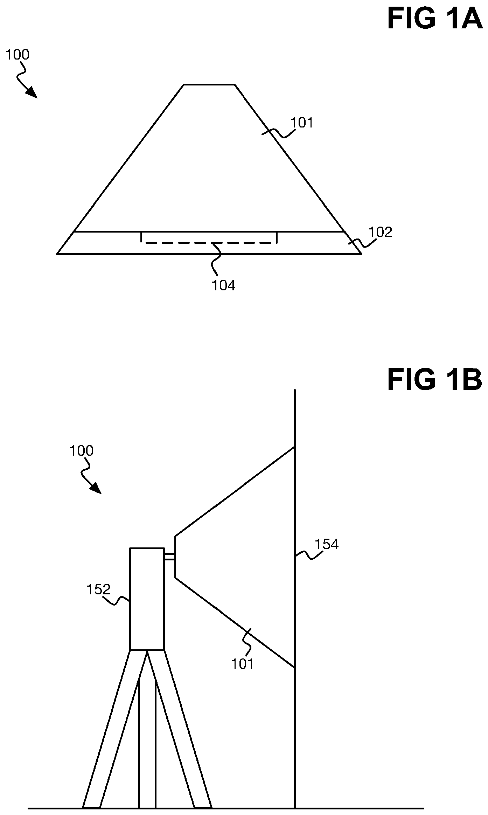

FIGs. 1A and 1B show example operation of a 3D topographical surface capture device 100 in two different modes. In the mode of example operation of FIG. 1A, a sample 104 is placed within a tray 102 of the capture device 100, which is then attached to the bottom of an upper portion 101 of the device 100. The sample 104 is thus within an internal cavity or volume of the capture device 100, providing a controlled environment in which photometric stereo imaging techniques can be used to synthesize 3D topographical surface images of the sample 104 from captured 2D topographical surface images of the sample 104.

In the mode of example operation of FIG. 1B, the tray 102 has been detached and removed from the bottom of the upper portion 101 of the 3D topographical surface capture device 100. A mount 152, such as a tripod in the example, has been attached to the other end of the upper portion 101 of the capture device 100 and moved or adjusted so that the device 100 can be placed adjacent to and abut a sample 154. A portion of the sample 154 is therefore effectively within the internal cavity or volume of the capture device 100, in that the sample 154 is subjected to a controlled environment in which photometric stereo imaging techniques can again be used to capture 2D topographical surface images of the sample 154 from which a 3D topographical surface image of the sample 154 can be synthesized.

The 3D topographical surface capture device 100 is portable, permitting its usage to capture 3D topographical surface images of samples, such as the sample 154, that are too large and/or immovable to otherwise be moved to the location of the capture device 100 and placed in the tray 102. The capture device 100 can be completely self-contained, including sufficient components to perform photometric stereo imaging to resultantly generate and store 3D topographical surface images of samples without the need for any other device, such as a host computing device. The stored images may then be later transmitted to other devices.

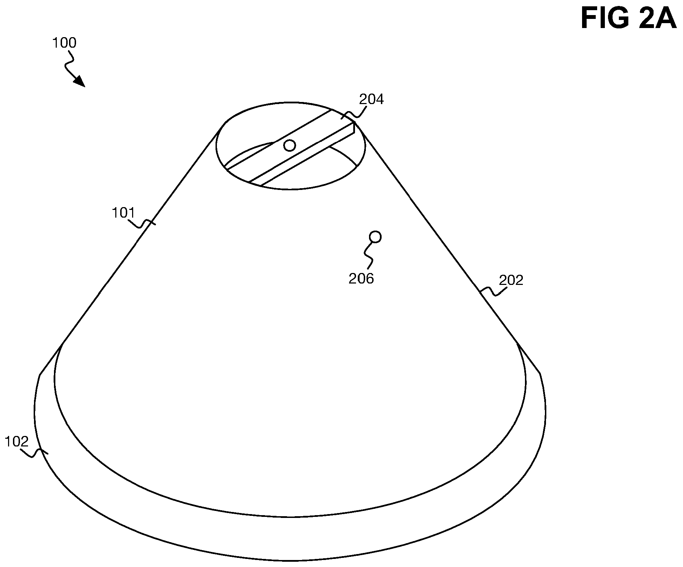

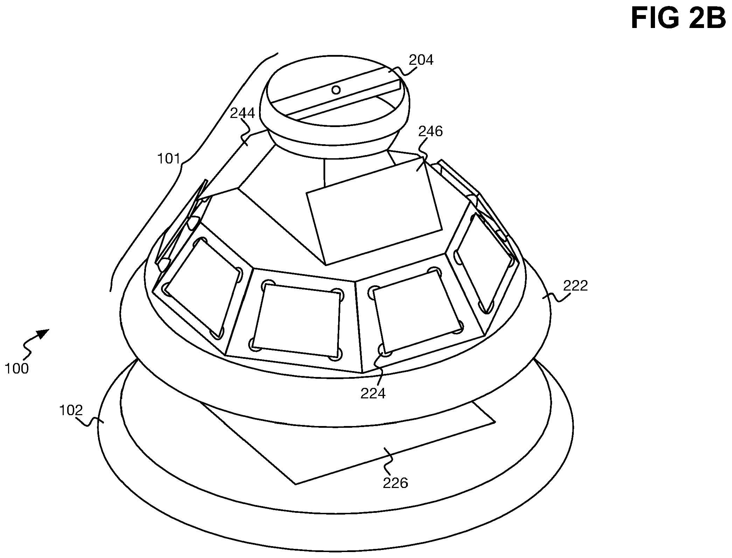

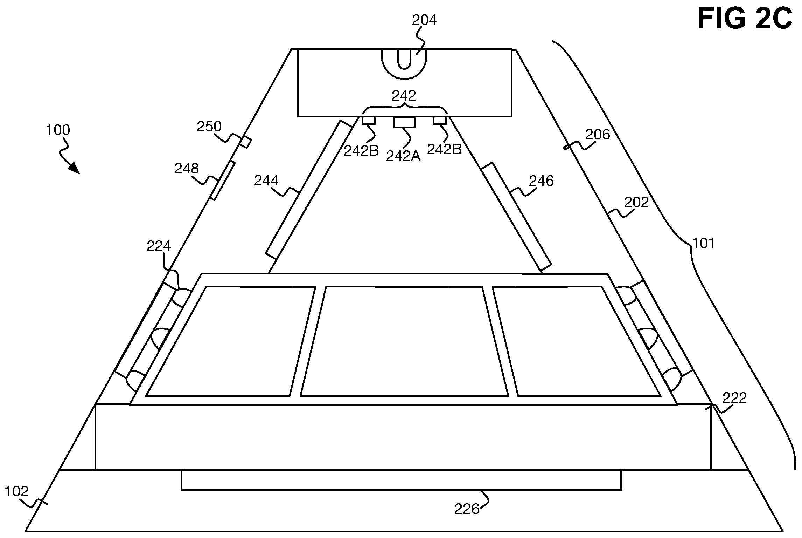

FIGs. 2A, 2B, and 2C show perspective, exploded perspective, and cross-sectional diagrams, respectively, of the example 3D topographical surface capture device 100. In FIG. 2A, the tray 102 is removably attached to the upper portion 101 of the capture device 100, and a cover 202 covers and hides from view internal components of the upper portion 101. In FIG. 2B, the tray 102 is shown in detached manner relative to the upper portion 101 of the capture device 100, and the cover 202 also has been removed from the upper portion 101. In FIG. 2C, the tray 102 is again removably attached to the upper portion 101 of the capture device, and while the cover 202 is shown in FIG. 2C, the cross-sectional nature of the diagram shows the internal components otherwise hidden by the cover 202.

The 3D topographical surface capture device 100 includes a housing 222, which may also be referred to as a frame, and which is covered by the cover 202. The housing 222 extends from the bottom of the upper portion 101 of the capture device 100 to the top of the upper portion 101 of the device 100. The housing 222 may be constructed as a single integrated fixture, or as multiple pieces that are attached to one another. The housing 222 may be made from a rigid plastic, metal, or other material.

The 3D topographical surface capture device 100 includes the tray 102 that is removably attachable to the bottom end of the housing 222. The tray 102 may be fabricated from the same or different material as the housing 222. The tray 102 may be removably attachable to the housing 222 in a magnetic or mechanical manner. As an example of the latter, the tray 102 may have prongs that snap into corresponding hole of the housing 222 when the tray 102 is aligned with the housing 222 and pushed against the housing 222. As another example, the tray 102 may have a protrusion that is fitted into a corresponding groove of the housing 222 when the tray 102 is aligned with the housing 222, where subsequent rotation of the tray 102 locks the tray 102 in place. As a third example, screws may be employed to secure the tray 102 to the housing 222.

The tray 102 includes a sample surface 226 on which the sample 104 is fixed during usage of the 3D topographical surface capture device 100 in the operation mode of FIG. 1A. The sample 104 may be fixed to the sample surface 226 of the tray 102 in a number of different ways. As an example, the sample 104 may be adhesively affixed to the sample surface 226. As another example, the sample 104 may instead be held into place with physical clips that form part of the tray 102.

The 3D topographical surface capture device 100 includes light sources 224 mounted around the perimeter of the housing 222. The light sources 224 may be in the form of groups of light-emitting diodes (LEDs) with top-mounted heat sinks, and may be linearly polarized. The light sources 224 directionally project light into the interior cavity or volume of the housing 222 to illuminate the sample 104 or 154. The light sources 224 can be individually controlled. For instance, the LEDs that are oriented along the same direction relative to the housing 222 form a light source 224 that can be controlled independently of the light sources 224 formed by the LEDs oriented along other directions relative to the housing 222.

The 3D topographical surface capture device 100 includes an imaging subassembly 242 mounted at a top end of the housing 222. The imaging subassembly 242 includes an image capture sensor 242A and one or multiple polarization-state viewers 242B that are directed inward into the interior cavity or volume of the housing 222 and thus towards the sample 104 or 154. The image capture sensor 242A may be of the type of those found in smartphones, which are ordinarily not used in 3D topographical surface capture devices. As one example, the image capture sensor 242A may be an autofocus, wide-angle camera device having autofocus and optical image stabilization (OIS). The polarization-state viewers 242B may be mechanical linear polarizer (LP) mechanisms such as rotatable polarizer wheels, or solid-state liquid crystal (LC) phase retarders with LP. The polarization-state viewers 242B polarize the light captured by the image capture sensor 242A.

The 3D topographical surface capture device 100 includes mounting hardware 204 that is mounted to or that is part of the housing 222, and an output indicator 206 that is visible through the cover 202. The mounting hardware 204 may be in the form of a threaded hole, to attach the housing 222 and therefore the capture device 100 to a mount 152, such as a tripod, to fixedly place the bottom end of the housing 222 so that it abuts a sample 154 in the mode of operation of FIG. 1B. The output indicator 206 may be an LED in one implementation.

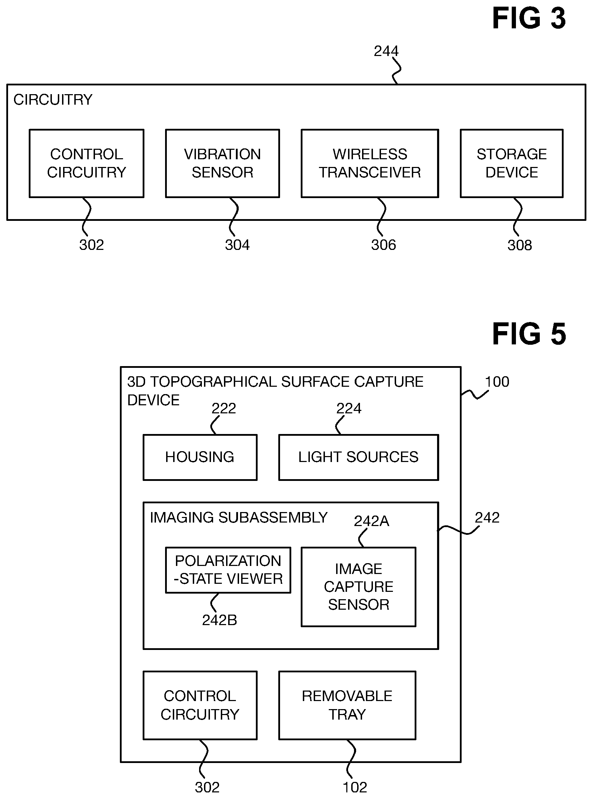

The 3D topographical surface capture device 100 includes circuitry 244 mounted to the housing 222. FIG. 3 shows a block diagram of example such circuitry 244 in one implementation. Specifically, the circuitry 244 can include control circuitry 302, and may also include a vibration sensor 304, a wireless transceiver 306, and/or a storage device 308. The control circuitry 302 is the circuitry that controls the imaging subassembly 242 and the light sources 224 to capture multiple 2D images of the sample 104 in the first mode of FIG. 1A or the sample 154 in the second mode of FIG. 1B under different lighting conditions. The control circuitry 302 then synthesizes or generates - and the capture device 100 thus effectively captures - a 3D topographical surface image of the sample 104 or 154 in question, using photometric stereo imaging techniques.

For example, to capture images of the sample 104 or 154 under different lighting conditions, the control circuitry 302 may selectively turn on different light sources 224, either individually or in different groups, and cause the image capture sensor 242A to capture 2D topographical surface images of the sample 104 or 154 at different polarizations via controlling the polarization-state viewers 242B. Once the requisite images under such different lighting conditions have been captured, the control circuitry 302 may then synthesize the captured 2D images into a 3D topographical surface image of the sample 104 or 154. A given lighting condition is controlled by two factors: the intensity of and which light sources 224 were on when an image was captured, and the polarization of the polarization-stated viewers 242B by which the image capture sensor 242A resultantly captured the image.

In synthesizing the 3D topographical surface image of the sample 104 or 154 from multiple captured 2D topographical surface images, the control circuitry 302 can account for the orientation and color of a changing illuminating light source (i.e., the light sources 224 in aggregate). The control circuitry 302 may computationally generate metadata from the captured 2D topographical surface images as well. For example, such metadata can be with regards to surface reflection properties of the sample, and/or with regards to transmissive light properties of the sample. In this case, too, the control circuitry 302 can account for the orientation and color of a changing illuminating light source.

The control circuitry 302 can be implemented as a processor and memory or other non-transitory computer-readable data storage medium storing program code executable by the processor. The processor and memory may be integrated within an application-specific integrated circuit (ASIC) in the case in which the processor is a special-purpose processor. The processor may instead be a general-purpose processor, such as a central processing unit (CPU), in which case the memory may be a separate semiconductor or other type of volatile or non-volatile memory.

The vibration sensor 304 detects vibrations of the 3D topographical surface capture device 100. The vibration sensor 304 may be in the form of a triple-axis or other type of accelerometer. Vibrations to which the capture device 100 are subjected can negatively impact the accuracy and precision of the captured 2D images, resulting in synthesis degraded 3D topographical surface images of samples. In one implementation, when the vibration sensor 304 detects vibrations greater than a threshold that can impact 3D topographical surface image capture, the output indicator 206 is illuminated to denote this, so as to notify the user of the capture device 100. In the same or different implementation, the control circuitry will control the light sources 224 and the lighting subassembly 242 to capture 2D images just in response to the detected vibrations being less than the threshold.

The wireless transceiver 306 permits other devices to wirelessly communicate with the 3D topographical surface capture device 100. For example, the wireless transceiver 306 may be a Wi-Fi, Bluetooth, or an NFC transceiver, permitting another device to directly or indirectly communicate with the capture device 100. Examples of direct wireless interconnections include peer-to-peer Bluetooth connections, NFC connections, Wi-Fi Direct connections, or ad hoc Wi-Fi networks. Examples of the indirect wireless interconnections include the capture device 100 joining a wireless local-area network (WLAN) to communicate with another device, either over the WLAN directly or via another network to which the WLAN is communicatively connected, such as the Internet.

As noted, the 3D topographical surface capture device 100 can be independently operable in both the mode of FIG. 1A and the mode of FIG. 1B without requiring communicative or conductive connection with any other device to capture 3D topographical surface images. However, communicative connection with another device via the wireless transceiver 306 can permit the capture device 100 to instead or also be operated under the control of another device. Communicative connection with another device via the wireless transceiver 306 can also permit the capture device 100 to transmit the synthesized 3D topographical surface images and/or computationally generated metadata to another device.

The storage device 308 may be a solid-state drive (SSD) or another type of storage device. The storage device 308 stores the 3D topographical surface images. For instance, as the imaging subassembly 242 captures images under different lighting conditions, the imaging subassembly 242 may store the captured 2D images on the storage device 308, either directly or through the control circuitry 302. The control circuitry 302 thereafter retrieves the captured 2D images from the storage device 308 to synthesize the 3D topographical surface images, and then stores them, along with any computationaly generated metadata, on the storage device 308.

Referring back to FIGs. 2A, 2B, and 2C, the 3D topographical surface capture device 100 can include an input mechanism 248 accessible through the cover 202. The input mechanism 248 may be in the form of a physical or capacitive button, and receives an image capture initiation input from a user. The control circuitry 302 thus can initiate control of the light sources 224 and the imaging subassembly 242 to capture 2D topographical surface images and then synthesize 3D topographical surface images in response to the input mechanism 248 receiving such image capture initiation input.

The 3D topographical surface capture device 100 can include a connector 250 accessible through the cover 202. The connector 250 may be a universal serial bus (USB), RJ45, or another type of connector. The connector 250 permits the capture device 100 to communicate with another device in a wired manner, as opposed to a wireless manner as provided by the wireless transceiver 306. For example, the connector 250 may connect to one end of a cable, where the other end of the cable is connected to another device. As another example, the connector 250 may provided for a wired connection to a network to which another device is connected in a wired and/or wireless manner.

The 3D topographical surface capture device 100 includes a battery 246. The battery 246 may be charged through the connector 250, through a different connector accessible through the cover 202, or in an inductive (i.e., wireless) manner. The battery 246 provides for portable usage of the capture device 100 without having to have the device 100 plugged into an external power source, such as a wall outlet. The battery 246 powers the various components of the capture device 100 that have been described, such as the light sources 224, the imaging subassembly 242, and the circuitry 244.

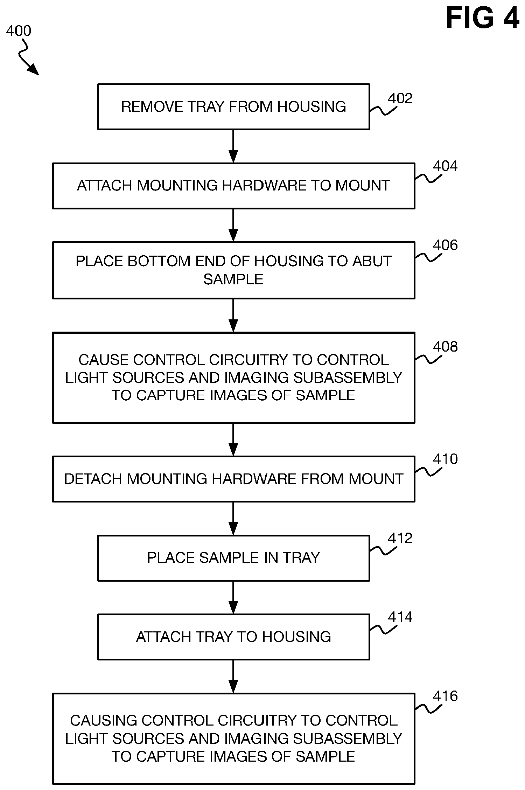

FIG. 4 shows an example method 400 of use of the 3D topographical surface capture device 100 in the mode of operation of FIG. 1B, followed by the mode of operation of FIG. 1A. To operate the capture device 100 in the mode of FIG. 1B, and assuming that the tray 102 is currently attached to the housing 222 of the capture device 100, the tray 102 is first removed from the housing 222 (402). A mount 152, such as a tripod, may be attached to the mounting hardware 204 of the capture device 100 (404), with the capture device 100 then located so that the bottom end of the housing 222 is placed to adjacently abut the sample 154 (406).

The control circuitry 302 of the 3D topographical surface capture device 100 is then caused to control the light sources 224 and the imaging subassembly 242 so that 2D topographical surface images of the sample 154 are ultimately captured in the operation mode of FIG. 1B (408). For example, the input mechanism 248 may be actuated by a user to initiate image capture. As another example, such image capture initiation input may be provided via another device communicatively connected to the capture device 100 via the wireless transceiver 306 or the connector 250. 3D topographical surface images may then be synthesized, and other metadata computationally produced, from the captured 2D images.

To then operate the 3D topographical surface capture device 100 in the mode of operation of FIG. 1A, the mounting hardware 204 of the capture device 100 may first be removed from a mount 152 if currently attached to one (410). Assuming that the tray 102 is currently detached from the housing 222, the sample 104 is placed (e.g., fixed) to the sample surface 226 of the tray 102 (412), and the tray 102 removably attached to the housing 222 (414). The control circuitry 302 of the 3D topographical surface capture device 100 is then caused to control the light sources 224 and the imaging subassembly 242 so that 2D topographical surface images of the sample 154 are captured in the operation mode of FIG. 1A (416), which may be initiated as in the operation mode of FIG. 1B. 3D topographical surface images may then similarly be synthesized, and other metadata computationally produced, from the captured 2D images.

FIG. 5 shows a block diagram of the example 3D topographical surface capture device 100. The capture device 100 includes a housing 222, and light sources 224 mounted around a perimeter of the housing 222. The capture device 100 includes an imaging subassembly 242 including a polarization-state viewer 242B and an image capture sensor 242A mounted to a top end of the housing 222 and directed inward into the housing 222. The capture device 100 includes control circuitry 302 to control the light sources 224 and the imaging subassembly 242 to capture 3D topographical surface images of a sample 104 or 154 at a bottom end of the housing 222.

The 3D topographical surface capture device 100 includes a tray 102 removably attached to a bottom end of the housing 222 to switchably configure the capture device 100 between a first mode of FIG. 1A and a second mode of FIG. 1B. In the first mode, the tray 102 is attached to the bottom end of the housing 222 and the sample 104 is attached to the tray 102. In the second mode, the tray 102 is removed from the bottom end of the housing 222 and the bottom end of the housing 222 is placed to abut the sample 154.

In the mode of FIG. 1B in particular, therefore, the capture device 100 can thus be used to capture 2D topographical surface images of a sample 154 that is too large too fit in the device 100 (i.e., on the tray 102 thereof) and/or that is immovable. The capture device 100 can be operated fully independently to capture such images, and then synthesize 3D topographical surface images and generate other metadata, without having to be communicatively or conductively connected to any other device, and without having to be plugged into an external power source. The capture device 100 thus provides for a portable and self-contained way by which to synthesize 3D topographical surface images using photometric stereo imaging and other physically based rendering (PBR) techniques.

## Claims

1. A three-dimensional, 3D, topographical surface capture device (100) comprising:
a housing (222);
light sources (224) mounted around a perimeter of the housing (222) and adapted to directionally project light into an interior cavity of the housing (222) to illuminate a sample (104, 154);
an imaging subassembly (242) including a polarization-state viewer (242b) and an image capture sensor (242a) mounted to a top end of the housing (222) and directed inward into the housing (222);
control circuitry (302) to control the light sources (224) and the imaging subassembly (242) to capture two-dimensional, 2D, topographical surface images from multiple lighting orientations of the sample (104, 154) at a bottom end of the housing (222) and to synthesize a 3D topographical surface image of the sample (104, 154) from the 2D topographical surface images; and
a tray (102) removably attached to a bottom end of the housing (222) to switchably configure the 3D topographical surface capture device (100) between:
a first mode in which the tray (102) is attached to the bottom end of the housing (222) and the sample (104, 154) is placed within the tray (102) and attached on a sample surface (226) therefore being within the interior cavity of the housing (222) and in which the image capture sensor (242a) is configured to capture the 2D topographical surfaces of the sample; and
a second mode in which the tray (102) is removed from the bottom end of the housing (222) and the bottom end of the housing (222) is placed to abut a sample (104, 154), a portion of the sample (104, 154) being therefore effectively within the interior cavity such that the image capture sensor (242a) is configured to capture the 2D topographical surfaces of the sample (104, 154).

2. The 3D topographical surface capture device (100) of claim 1, further comprising:
mounting hardware (204) mounted to or that is part of the housing (222), to attach the housing (222) to a mount (152) to fixedly place the bottom end of the housing (222) to abut the sample (104, 154) in the second mode.

3. The 3D topographical surface capture device (100) of claim 2, further comprising:
a vibration sensor (304) mounted to the housing (222) to detect vibrations of the 3D topographical surface capture device (100).

4. The 3D topographical surface capture device (100) of claim 3, further comprising:
an output indicator (206) to denote whether the detected vibrations are greater than a threshold.

5. The 3D topographical surface capture device (100) of claim 3, wherein the control circuitry (302) is to control the light sources (224) and the imaging subassembly (242) to capture the 2D topographical surface images of the sample (104, 154) just in response to the detected vibrations being less than a threshold.

6. The 3D topographical surface capture device (100) of claim 1, further comprising one or multiple of:
an input mechanism (248) to receive an image capture initiation input, wherein the control circuitry (302) is to initiate control of the light sources (224) and the imaging subassembly (242) to capture the 2D topographical surface images of the sample (104, 154) in response to the image capture initiation input;
a storage device (308) mounted to the housing (222), wherein the control circuitry (302) stores the 2D topographical surface images of the sample (104, 154);
a battery (246) mounted to the housing (222) to power the light sources (224), the imaging subassembly (242), and the control circuitry (302);
a wireless transceiver (306) mounted to the housing (222) to wirelessly communicate with a device other than the 3D topographical surface capture device (100); and
a connector (250) to communicate with the device other than the 3D topographical surface capture device (100) in a wired manner.

7. The 3D topographical surface capture device (100) of claim 6, wherein the 3D topographical surface capture device (100) is independently operable in both the first and second modes without requiring communicative or conductive connection with any other device to capture the 2D topographical surface images of the sample (104, 154).

8. The 3D topographical surface capture device (100) of claim 1, wherein the control circuitry (302) is further to computationally generate metadata regarding surface reflection properties of the sample (104, 154) from the 2D topographical surface images.

9. The 3D topographical surfaced capture device (100) of claim 1, wherein the control circuitry (302) is further to computationally generate metadata regarding transmissive light properties of the sample (104, 154) from the 2D topographical surface images.

10. A method for generating a three-dimensional, 3D, topographical surface of a sample (104, 154) comprising:
operating a 3D topographical surface capture device (100) in a first mode or a second mode, the 3D topographical surface capture device (100) comprising light sources (224) mounted around a perimeter of a housing (222), wherein the light sources (224) are adapted to directionally project light into an interior cavity of the housing (222) to illuminate a sample (104, 154), and an imaging subassembly (242) including a polarization-state viewer (242b) and an image capture sensor (242a) mounted to a top end of the housing (222) and directed inward into the housing (222) , wherein:
in the first mode, a tray (102) is removably attached to a bottom end of the housing (222) of the 3D topographical surface capture device (100), the sample (104, 154) is placed within the tray (102) and attached to a sample surface (226) of the tray (102), and
and, in the second mode, the tray (102) is removed from the bottom end of the housing (222) and the bottom end of the housing (222) is placed to abut a sample (104, 154), a portion of the sample (104, 154) being therefore effectively within the interior cavity; and
the method comprises causing control circuitry (302) of the 3D topographical surface capture device (100) to control the light sources (224) and the imaging subassembly (242) to capture two-dimensional, 2D, topographical surface images of the sample (104, 154) at the bottom end of the housing (222) and to synthesize a 3D topographical surface image of the sample (104, 154) from the 2D topographical surface images in the first or second mode of the 3D topographical surface capture device.

11. The method of claim 10, further comprising:
attaching mounting hardware (204) of the 3D topographical surface capture device (100) that is mounted to or that is part of the housing (222) to a mount (152),
wherein placing the bottom end of the housing (222) to abut the sample (104, 154) comprises moving or adjusting the mount (152) so that the bottom end of the housing (222) abuts the sample (104, 154).

12. The method of claim 10, wherein the mode is a second mode, and the method further comprises:
placing a different sample (104, 154) in the tray (102);
removably attach the tray (102) to the bottom end of the housing (222); and
controlling the control circuitry (302) to control the light sources and the imaging subassembly (242) to capture 3D topographical surface images of the different sample at the bottom end of the housing (222) in a first mode of the 3D topographical surface capture device (100).

13. The method of claim 10, wherein the 3D topographical surface capture device (100) further comprises:
an input mechanism (248) to receive an image capture initiation input;
a storage device (308) to store the 3D topographical surface images of the sample (104, 154);
a battery (246) mounted to power the light sources (224), the imaging subassembly (242), and the control circuitry (302); and
a communication mechanism to communicate with a device other than the 3D topographical surface capture device (100).

14. The method of claim 13, wherein the 3D topographical surface capture device (100) is independently operable in the mode without requiring communicative or conductive connection with any other device to capture the 3D topographical surface images of the sample (104, 154).

15. The method of claim 10, wherein the control circuitry (302) further generates, from the 2D topographical surfaced images, either or both of:
metadata regarding surface reflection properties of the sample (104, 154); and metadata regarding transmissive light properties of the sample (104, 154) from the 2D topographical surface images.

## Patentansprüche

1. Vorrichtung (100) zum Erfassen dreidimensionaler, 3D-, topografischer Oberflächen, die umfasst:
ein Gehäuse (222);
Lichtquellen (224), die um einen Umfang des Gehäuses (222) angebracht und dazu ausgebildet sind, Licht gerichtet in einen inneren Hohlraum des Gehäuses (222) zu projizieren, um eine Probe (104, 154) zu beleuchten;
eine Bildgebungsunterbaugruppe (242), die einen Polarisationszustandsbetrachter (242b) und einen Bilderfassungssensor (242a) einschließt, an einem oberen Ende des Gehäuses (222) angebracht ist und nach innen in das Gehäuse (222) gerichtet ist;
Regelschaltung (302), um die Lichtquellen (224) und die Bildgebungsunterbaugruppe (242) zu steuern, um zweidimensionale, 2D-, topografische Oberflächenbilder aus mehreren Beleuchtungsausrichtungen der Probe (104, 154) an einem unteren Ende des Gehäuses (222) zu erfassen und ein topografisches 3D-Oberflächenbild der Probe (104, 154) aus den topografischen 2D-Oberflächenbildern zu synthetisieren; und
eine Schale (102), die abnehmbar an einem unteren Ende des Gehäuses (222) befestigt ist, um die Vorrichtung zum Erfassen topografischer 3D-Oberflächen (100) umschaltbar zu konfigurieren zwischen:
einem ersten Modus, in dem die Schale (102) am unteren Ende des Gehäuses (222) befestigt ist und die Probe (104, 154) in der Schale (102) platziert und an einer Probenoberfläche (226) befestigt ist, wodurch sie sich innerhalb des inneren Hohlraums des Gehäuses (222) befindet, und in dem der Bilderfassungssensor (242a) dazu konfiguriert ist, die topografischen 2D-Oberflächen der Probe zu erfassen; und
einem zweiten Modus, in dem die Schale (102) vom unteren Ende des Gehäuses (222) entfernt wird und das untere Ende des Gehäuses (222) so platziert ist, dass es an einer Probe (104, 154) anliegt, wobei sich ein Teil der Probe (104, 154) daher effektiv innerhalb des inneren Hohlraums befindet, sodass der Bilderfassungssensor (242a) dazu konfiguriert ist, die topografischen 2D-Oberflächen der Probe (104, 154) zu erfassen.

2. Vorrichtung zum Erfassen topografischer 3D-Oberflächen (100) nach Anspruch 1, die ferner umfasst:
Befestigungsmittel (204), die an dem Gehäuse (222) angebracht oder Teil davon sind, um das Gehäuse (222) an einer Halterung (152) zu befestigen, um das untere Ende des Gehäuses (222) fest zu platzieren, sodass es in dem zweiten Modus an der Probe (104, 154) anliegt.

3. Vorrichtung zum Erfassen topografischer 3D-Oberflächen (100) nach Anspruch 2, die ferner umfasst:
einen Vibrationssensor (304), der an dem Gehäuse (222) angebracht ist, um Vibrationen der Vorrichtung zum Erfassen topografischer 3D-Oberflächen (100) zu erkennen.

4. Vorrichtung zum Erfassen topografischer 3D-Oberflächen (100) nach Anspruch 3, die ferner umfasst:
einen Ausgabeindikator (206) zur Anzeige, ob die erfassten Vibrationen größer als ein Schwellenwert sind.

5. Vorrichtung zum Erfassen topografischer 3D-Oberflächen (100) nach Anspruch 3, wobei die Regelschaltung (302) dazu dient, die Lichtquellen (224) und die Bildgebungsunterbaugruppe (242) zu steuern, um die topografischen 2D-Oberflächenbilder der Probe (104, 154) nur als Reaktion darauf zu erfassen, dass die erkannten Vibrationen kleiner als ein Schwellenwert sind.

6. Vorrichtung zum Erfassen topografischer 3D-Oberflächen (100) nach Anspruch 1, die ferner umfasst eines oder mehrere von:
einem Eingabemechanismus (248) zum Empfangen einer Bilderfassungsinitiierungseingabe, wobei die Regelschaltung (302) dazu dient, die Steuerung der Lichtquellen (224) und der Bildgebungsunterbaugruppe (242) zu initiieren, um die topografischen 2D-Oberflächenbilder der Probe (104, 154) als Reaktion auf die Bilderfassungsinitiierungseingabe zu erfassen;
einer an dem Gehäuse (222) angebrachten Speichervorrichtung (308), wobei die Regelschaltung (302) die topografischen 2D-Oberflächenbilder der Probe (104, 154) speichert;
einer Batterie (246), die an dem Gehäuse (222) angebracht ist, um die Lichtquellen (224), die Bildgebungsunterbaugruppe (242) und die Regelschaltung (302) mit Strom zu versorgen;
einem drahtlosen Transceiver (306), der an dem Gehäuse (222) angebracht ist, um drahtlos mit einer anderen Vorrichtung als der Vorrichtung zum Erfassen topografischer 3D-Oberflächen (100) zu kommunizieren; und
einem Anschluss (250), um mit der anderen Vorrichtung als der Vorrichtung zum Erfassen topografischer 3D-Oberflächen (100) drahtgebunden zu kommunizieren.

7. Vorrichtung zum Erfassen topografischer 3D-Oberflächen (100) nach Anspruch 6, wobei die Vorrichtung zum Erfassen topografischer 3D-Oberflächen (100) sowohl im ersten als auch im zweiten Modus unabhängig voneinander betriebsfähig ist, ohne einen kommunikativen oder leitfähigen Anschluss mit einer anderen Vorrichtung zu erfordern, um die topografischen 2D-Oberflächenbilder der Probe (104, 154) zu erfassen.

8. Vorrichtung zum Erfassen topografischer 3D-Oberflächen (100) nach Anspruch 1, wobei die Regelschaltung (302) ferner dazu dient, aus den topografischen 2D-Oberflächenbildern rechnerisch Metadaten bezüglich Oberflächenreflexionseigenschaften der Probe (104, 154) zu erzeugen.

9. Vorrichtung zum Erfassen topografischer 3D-Oberflächen (100) nach Anspruch 1, wobei die Regelschaltung (302) ferner dazu dient, aus den topografischen 2D-Oberflächenbildern rechnerisch Metadaten bezüglich transmissiver Lichteigenschaften der Probe (104, 154) zu erzeugen.

10. Verfahren zum Erzeugen einer dreidimensionalen, 3D-, topographischen Oberfläche einer Probe (104, 154), die umfasst:
Betreiben einer Vorrichtung zum Erfassen topografischer 3D-Oberflächen (100) in einem ersten Modus oder einem zweiten Modus, wobei die Vorrichtung zum Erfassen topografischer 3D-Oberflächen (100) Lichtquellen (224) umfasst, die um einen Umfang eines Gehäuses (222) herum angebracht sind, wobei die Lichtquellen (224) dazu ausgelegt sind, Licht gerichtet in einen inneren Hohlraum des Gehäuses (222) zu projizieren, um eine Probe (104, 154) zu beleuchten, und eine Bildgebungsunterbaugruppe (242), die einen Polarisationszustandsbetrachter (242b) und einen Bilderfassungssensor (242a) einschließt, die an einem oberen Ende des Gehäuses (222) angebracht und nach innen in das Gehäuse (222) gerichtet sind, wobei:
in dem ersten Modus eine Schale (102) abnehmbar an einem unteren Ende des Gehäuses (222) der Vorrichtung zum Erfassen topografischer 3D-Oberflächen (100) befestigt ist, die Probe (104, 154) innerhalb der Schale (102) platziert und an einer Probenoberfläche (226) der Schale (102) befestigt ist, und
in dem zweiten Modus, die Schale (102) vom unteren Ende des Gehäuses (222) entfernt wird und das untere Ende des Gehäuses (222) so platziert wird, dass es an einer Probe (104, 154) anliegt, wobei sich ein Abschnitt der Probe (104, 154) daher effektiv innerhalb des inneren Hohlraums befindet; und
das Verfahren das Veranlassen einer Regelschaltung (302) der Vorrichtung zum Erfassen topografischer 3D-Oberflächen (100) umfasst, die Lichtquellen (224) und die Bildgebungsunterbaugruppe (242) zu steuern, um zweidimensionale, 2D-, topografische Oberflächenbilder der Probe (104, 154) am unteren Ende des Gehäuses (222) zu erfassen und ein topografisches 3D-Oberflächenbild der Probe (104, 154) aus den topografischen 2D-Oberflächenbildern im ersten oder zweiten Modus der Vorrichtung zum Erfassen topografischer 3D-Oberflächen zu synthetisieren.

11. Verfahren nach Anspruch 10, das ferner umfasst:
Befestigen von Befestigungsmitteln (204) der Vorrichtung zum Erfassen topografischer 3D-Oberflächen (100), die an dem Gehäuse (222) angebracht oder Teil desselben sind, an einer Halterung (152),
wobei das Platzieren des unteren Endes des Gehäuses (222), um an der Probe (104, 154) anzuliegen, das Bewegen oder Einstellen der Halterung (152) umfasst, sodass das untere Ende des Gehäuses (222) an der Probe (104, 154) anliegt.

12. Verfahren nach Anspruch 10, wobei der Modus ein zweiter Modus ist und das Verfahren ferner umfasst:
Platzieren einer anderen Probe (104, 154) in der Schale (102);
abnehmbares Befestigen der Schale (102) am unteren Ende des Gehäuses (222); und
Steuern der Regelschaltung (302) zum Steuern der Lichtquellen und der Bildgebungsunterbaugruppe (242) zum Erfassen von topografischen 3D-Oberflächenbildern der anderen Probe am unteren Ende des Gehäuses (222) in einem ersten Modus der Vorrichtung zum Erfassen topografischer 3D-Oberflächen (100).

13. Verfahren nach Anspruch 10, wobei die Vorrichtung zum Erfassen topografischer 3D-Oberflächen (100) ferner umfasst:
einen Eingabemechanismus (248) zum Empfangen einer Bilderfassungsinitiierungseingabe;
eine Speichervorrichtung (308) zum Speichern der topografischen 3D-Oberflächenbilder der Probe (104, 154);
eine Batterie (246), die angebracht ist, um die Lichtquellen (224), die Bildgebungsunterbaugruppe (242) und die Regelschaltung (302) mit Strom zu versorgen; und
einen Kommunikationsmechanismus zum Kommunizieren mit einer anderen Vorrichtung als der Vorrichtung zum Erfassen topografischer 3D-Oberflächen (100).

14. Verfahren nach Anspruch 13, wobei die Vorrichtung zum Erfassen topografischer 3D-Oberflächen (100) in dem Modus unabhängig voneinander betriebsfähig ist, ohne einen kommunikativen oder leitfähigen Anschluss mit einer anderen Vorrichtung zu erfordern, um die topografischen 3D-Oberflächenbilder der Probe (104, 154) zu erfassen.

15. Verfahren nach Anspruch 10, wobei die Regelschaltung (302) ferner aus den topografischen 2D-Oberflächenbildern eines oder beides erzeugt von:
Metadaten bezüglich der Oberflächenreflexionseigenschaften der Probe (104, 154); und Metadaten bezüglich transmissiver Lichteigenschaften der Probe (104, 154) aus den topografischen 2D-Oberflächenbildern.

## Revendications

1. Dispositif de capture de surface topographique tridimensionnelle,
3D, (100) comprenant :
un boîtier (222) ;
des sources de lumière (224) montées autour d'un périmètre du boîtier (222) et adaptées pour projeter de manière directionnelle de la lumière dans une cavité intérieure du boîtier (222) afin d'éclairer un échantillon (104, 154) ;
un sous-ensemble d'imagerie (242) comportant une visionneuse d'état de polarisation (242b) et un capteur de capture d'image (242a) montés sur une extrémité supérieure du boîtier (222) et dirigés vers l'intérieur du boîtier (222) ;
une circuiterie de commande (302) pour commander les sources de lumière (224) et le sous-ensemble d'imagerie (242) destiné à capturer des images de surface topographique bidimensionnelles, 2D, à partir de plusieurs orientations d'éclairage de l'échantillon (104, 154) au niveau d'une extrémité inférieure du boîtier (222) et destiné à synthétiser une image de surface topographique 3D de l'échantillon (104, 154) à partir des images de surface topographique 2D ; et
un plateau (102) fixé de manière amovible à une extrémité inférieure du boîtier (222) destiné à configurer de manière commutable le dispositif de capture de surface topographique 3D (100) entre :
un premier mode dans lequel le plateau (102) est fixé à l'extrémité inférieure du boîtier (222) et l'échantillon (104, 154) est placé à l'intérieur du plateau (102) et fixé sur une surface d'échantillon (226) se trouvant donc à l'intérieur de la cavité intérieure du boîtier (222) et dans lequel le capteur de capture d'image (242a) est configuré pour capturer les surfaces topographiques 2D de l'échantillon ; et
un second mode dans lequel le plateau (102) est retiré de l'extrémité inférieure du boîtier (222) et l'extrémité inférieure du boîtier (222) est placée pour venir en butée contre un échantillon (104, 154), une partie de l'échantillon (104, 154) se trouvant donc efficacement à l'intérieur de la cavité intérieure de telle sorte que le capteur de capture d'image (242a) est configuré pour capturer les surfaces topographiques 2D de l'échantillon (104, 154).

2. Dispositif de capture de surface topographique 3D (100) selon la revendication 1, comprenant en outre :
du matériel de montage (204) monté sur ou faisant partie du boîtier (222), destiné à fixer le boîtier (222) à une monture (152) pour placer de manière fixe l'extrémité inférieure du boîtier (222) pour venir en butée contre l'échantillon (104, 154) dans le second mode.

3. Dispositif de capture de surface topographique 3D (100) selon la revendication 2, comprenant en outre :
un capteur de vibrations (304) monté sur le boîtier (222) destiné à détecter des vibrations du dispositif de capture de surface topographique 3D (100).

4. Dispositif de capture de surface topographique 3D (100) selon la revendication 3, comprenant en outre :
un indicateur de sortie (206) destiné à indiquer si les vibrations détectées sont supérieures à un seuil.

5. Dispositif de capture de surface topographique 3D (100) selon la revendication 3, dans lequel la circuiterie de commande (302) doit commander les sources de lumière (224) et le sous-ensemble d'imagerie (242) pour capturer les images de surface topographique 2D de l'échantillon (104, 154) juste en réponse aux vibrations détectées étant inférieures à un seuil.

6. Dispositif de capture de surface topographique 3D (100) selon la revendication 1, comprenant en outre un ou plusieurs parmi :
un mécanisme d'entrée (248) destiné à recevoir une entrée d'initiation de capture d'image, dans lequel la circuiterie de commande (302) doit initier la commande des sources de lumière (224) et du sous-ensemble d'imagerie (242) destiné à capturer les images de surface topographique 2D de l'échantillon (104, 154) en réponse à l'entrée d'initiation de capture d'image ;
un dispositif de stockage (308) monté sur le boîtier (222), dans lequel la circuiterie de commande (302) stocke les images de surface topographique 2D de l'échantillon (104, 154) ;
une batterie (246) montée sur le boîtier (222) destinée à alimenter les sources de lumière (224), le sous-ensemble d'imagerie (242) et la circuiterie de commande (302) ;
un émetteur-récepteur sans fil (306) monté sur le boîtier (222) destiné à communiquer sans fil avec un dispositif autre que le dispositif de capture de surface topographique 3D (100) ; et
un connecteur (250) destiné à communiquer avec le dispositif autre que le dispositif de capture de surface topographique 3D (100) d'une manière câblée.

7. Dispositif de capture de surface topographique 3D (100) selon la revendication 6, dans lequel le dispositif de capture de surface topographique 3D (100) peut fonctionner indépendamment dans le premier et le second mode sans nécessiter de connexion communicative ou conductrice avec un autre dispositif pour capturer les images de surface topographique 2D de l'échantillon (104, 154).

8. Dispositif de capture de surface topographique 3D (100) selon la revendication 1, dans lequel la circuiterie de commande (302) est en outre destinée à générer par calcul des métadonnées concernant des propriétés de réflexion de surface de l'échantillon (104, 154) à partir des images de surface topographique 2D.

9. Dispositif de capture de surface topographique 3D (100) selon la revendication 1, dans lequel la circuiterie de commande (302) doit en outre générer par calcul des métadonnées concernant des propriétés de lumière transmissive de l'échantillon (104, 154) à partir des images de surface topographique 2D.

10. Procédé permettant de générer une surface topographique tridimensionnelle, 3D, d'un échantillon (104, 154) comprenant :
le fonctionnement d'un dispositif de capture de surface topographique 3D (100) dans un premier mode ou un second mode, le dispositif de capture de surface topographique 3D (100) comprenant des sources de lumière (224) montées autour d'un périmètre d'un boîtier (222), dans lequel les sources de lumière (224) sont adaptées pour projeter de manière directionnelle de la lumière dans une cavité intérieure du boîtier (222) afin d'éclairer un échantillon (104, 154), et un sous-ensemble d'imagerie (242) comportant une visionneuse d'état de polarisation (242b) et un capteur de capture d'image (242a) montés sur une extrémité supérieure du boîtier (222) et dirigés vers l'intérieur du boîtier (222), dans lequel :
dans le premier mode, un plateau (102) est fixé de manière amovible à une extrémité inférieure du boîtier (222) du dispositif de capture de surface topographique 3D (100), l'échantillon (104, 154) est placé à l'intérieur du plateau (102) et fixé à une surface d'échantillon (226) du plateau (102), et
et, dans le second mode, le plateau (102) est retiré de l'extrémité inférieure du boîtier (222) et l'extrémité inférieure du boîtier (222) est placée pour venir en butée contre un échantillon (104, 154), une partie de l'échantillon (104, 154) se trouvant donc efficacement à l'intérieur de la cavité intérieure ; et
le procédé comprend le fait d'amener la circuiterie de commande (302) du dispositif de capture de surface topographique 3D (100) à commander les sources de lumière (224) et le sous-ensemble d'imagerie (242) à capturer des images de surface topographique bidimensionnelles, 2D, de l'échantillon (104, 154) au niveau de l'extrémité inférieure du boîtier (222) et à synthétiser une image de surface topographique 3D de l'échantillon (104, 154) à partir des images de surface topographique 2D dans le premier ou second mode du dispositif de capture de surface topographique 3D.

11. Procédé selon la revendication 10, comprenant en outre :
la fixation du matériel de montage (204) du dispositif de capture de surface topographique 3D (100) qui est monté sur ou qui fait partie du boîtier (222) à une monture (152),
dans lequel le placement de l'extrémité inférieure du boîtier (222) pour venir en butée contre l'échantillon (104, 154) comprend le déplacement ou le réglage de la monture (152) de sorte que l'extrémité inférieure du boîtier (222) vient en butée contre l'échantillon (104, 154).

12. Procédé selon la revendication 10, dans lequel le mode est un second mode, et le procédé comprend en outre :
le placement d'un échantillon différent (104, 154) dans le plateau (102) ;
la fixation de manière amovible du plateau (102) à l'extrémité inférieure du boîtier (222) ; et
la commande de la circuiterie de commande (302) pour commander les sources de lumière et le sous-ensemble d'imagerie (242) afin de capturer des images de surface topographique 3D de l'échantillon différent au niveau de l'extrémité inférieure du boîtier (222) dans un premier mode du dispositif de capture de surface topographique 3D (100).

13. Procédé selon la revendication 10, dans lequel le dispositif de capture de surface topographique 3D (100) comprend en outre :
un mécanisme d'entrée (248) destiné à recevoir une entrée d'initiation de capture d'image ;
un dispositif de stockage (308) destiné à stocker les images de surface topographique 3D de l'échantillon (104, 154) ;
une batterie (246) montée destinée à alimenter les sources de lumière (224), le sous-ensemble d'imagerie (242) et la circuiterie de commande (302) ; et
un mécanisme de communication destiné à communiquer avec un dispositif autre que le dispositif de capture de surface topographique 3D (100).

14. Procédé selon la revendication 13, dans lequel le dispositif de capture de surface topographique 3D (100) peut fonctionner indépendamment dans le mode sans nécessiter de connexion communicative ou conductrice avec un quelconque autre dispositif pour capturer les images de surface topographique 3D de l'échantillon (104, 154).

15. Procédé selon la revendication 10, dans lequel la circuiterie de commande (302) génère en outre, à partir des images de surface topographique 2D, l'un ou l'autre des éléments suivants, ou les deux :
des métadonnées concernant des propriétés de réflexion de surface de l'échantillon (104, 154) ; et des métadonnées concernant des propriétés de lumière transmissive de l'échantillon (104, 154) à partir des images de surface topographique 2D.
